# EUROPEAN PATENT SPECIFICATION

(11) **EP 2 113 156 B1**
(45) Date of publication and mention of the grant of the patent: **30.10.2013**
(21) Application number: 08730098.4
(22) Date of filing: 19.02.2008
(51) Int. Cl.: H04Q 3/58, H04B 7/26, H04M 3/436, H04M 3/42

(54) **UNSTRUCTURED SUPPLEMENTARY SERVICES DATA APPLICATION WITHIN A WIRELESS NETWORK**
USSD-ANWENDUNG IN EINEM DRAHTLOSEN NETZ
APPLICATION DE DONNÉES DE SERVICES SUPPLÉMENTAIRES NON STRUCTURÉES DANS UN RÉSEAU SANS FIL

(30) Priority: 19.02.2007 US 890542 P
(43) Date of publication of application: 04.11.2009
(73) Proprietor: Vascode Technologies Ltd., 66024 Tel Aviv (IL)
(72) Inventor: MOTTES, Dorron, 694217 Tel Aviv (IL)
(74) Representative: Schramm, Michael
(86) International application number: PCT/US2008/054227
(87) International publication number: WO 2008/103633

(56) References cited:
- WO-A1-2004/010727
- WO-A1-2004/054293
- US-A1- 2004 203 924
- US-A1- 2006 148 459
- US-B1- 6 496 689

## Description

### Technical Field

The invention generally relates to wireless exchanges, and more specifically to wireless telephone exchanges using USSD (Unstructured Supplementary Services Data) as a data communication channel.

### Background of the Invention

Calls sent to wireless subscribers lack important information about the callers, calls and tasks related to the call. When a call is received by a subscriber, the subscriber usually needs to converse with the caller before the caller can be forwarded to another destination. During the call if information about the caller is displayed in the device, the display may be lost because of subscriber actions and the original display may not be recovered. Also calls forwarded to another party may lose the information about the caller in the new destination device. When conference calls are to be established, the called party may have information about the original caller only after a voice path is created.

An example for one technique for exchanging information between nodes in telecommunication systems is disclosed in International Application Publication No. WO 2004/054293. An example for an apparatus for pre-call notification can be found in US Patent Application Publication No. 2006/148450 to Wolfman, et al.

### Summary of the Invention

In view of the above mentioned deficiencies of the prior art certain aspects of the present invention allow parties receiving incoming calls such as operators, secretaries, employees, conference calls establishment, to obtain information about the caller, call, tasks related to the call or other information before and during voice path establishment. Other aspects will also automatically provide the status of device availability to another device.

The invention is defined according to the appended claims.

### Brief Description of the Drawings

FIG. 1 is a schematic view of a system configured in accordance with a preferred embodiment of the invention.

FIG. 2 is a block diagram illustrating an implementation method of Device status information by using a USSD interface.

FIG. 3 is a block diagram illustrating an implementation method of USSD call origination;

FIG. 4 is a block diagram illustrating an implementation method of USSD call rejection/forwarding by a CCI subscriber.

FIG. 5 is a block diagram illustrating an implementation method of interaction capabilities between a CCI subscriber and CCI subsystem.

FIG. 6 is an exemplary call flow of a subscriber receiving a USSD message to process calls due to a number of calls waiting to be processed exceeded a threshold.

FIG. 7 is an exemplary call flow of a CCI subscriber "barge in."

FIG. 8 is an exemplary call flow of caller information in an incoming call.

### Detailed Description of the Invention

This disclosure describes the best mode or modes of practicing the invention as presently contemplated. It is important to note that these embodiments are only examples to advise one of ordinary skill in the art of the many advantageous uses of the innovative teachings herein. In general, statements made in the specification of the present application do not necessarily limit any of the various claimed inventions. Moreover, some statements may apply to some inventive features but not to others. In general, unless otherwise indicated, singular elements may be in plural and vice versa with no loss of generality. In the various views of the drawings, like reference characters designate like or similar parts. The present invention will be understood and appreciated more fully from the following non-limiting detailed description.

According to an embodiment of the disclosed invention, mobile stations and network devices exchange messages for call control and information exchange using messages in accordance with the Unstructured Supplementary Service Data (USSD) protocol. Typically, a device may send a specific call control request over the network as a USSD request to another device, which returns a response as a USSD response. For example, this response may contain a list of possible call control selections, options or actions that the device may take. The response may be resent by the responding device. Devices may also receive information via USSD notifications from other devices on the network.

In an exemplary USSD message, a subscriber receives a USSD message with the call control status (i.e., in-call, idle, etc.) of another subscriber. This data is sent independently, or as part of any of the relevant call control interaction messages i.e. if a subscriber is incall and a current USSD message is the incall message, the CCI subsystem sends a new incall USSD message which includes the state change of the other subscriber and the incall call control interactions options (can be same interactions or new list of options). The other subscriber call control updates can be received at all times or can be restricted to certain times, such as time of the day, state of incall subscriber.

In another exemplary embodiment, the method further includes associating a message with the call being rerouted for display at a mobile station. Preferably, the message is transmitted to the mobile station by using USSD.

In another exemplary USSD message, a subscriber receives a USSD message with details of all calls waiting in a queue (the subscriber's own queue or any other subscriber queue). Each time there is a change in the queue a new USSD message is sent to the subscriber. A subscriber receives the above message only if a defined threshold of a number of calls in the queue has been reached.

In another exemplary USSD message, a subscriber receives a USSD message with a list of numbers or names of employees. The subscriber then selects from the list a destination target, in which the subscriber can barge in to a call or silently monitor the selected destination.

In another exemplary USSD message, a subscriber receives a USSD message with the name of the caller and/or their title in the company, for example, "Joe Cohen, VP Marketing Acme Ltd. is calling." The name of a caller can be stored in a CCI database or any integrated database.

In addition or in the alternative, the method further includes diverting a call received at a mobile terminal to another station associated with a private network, which can be another mobile terminal, a PC, a wireline telephone, etc.

Preferably, this diversion of a call is made in response to a request initiated by the mobile station user, e.g. by using a pre-defined key associated with that mobile station. Still preferably, a message may be associated with the diverted call, and may be generated in response to a pre-define code sent from the mobile station. The message may be either a visual message (such as USSD message, etc.) or a voice message, depending on the type of device to which the call has been diverted. Thus, while the end user gets an indication of the arriving call (e.g. ringing) he/she can select to divert the call to a third party (e.g. a secretary), and select a notification, which will be presented at the secretary's station (e.g. "please take a message," "I am busy, will call them later," "get rid of them," etc.)

Local option - The transfer can be requested by the mobile station and executed by a switch associated with the private network. In which case, notifications will be stored locally, but there will be a need to synchronize them with the cellular network operation.

Network option - the mobile station sends a message the to a communication device according to the principles of the invention (the Call Control Interaction, CCI subsystem) and that device takes control of the transfer request, manages the process, while instructions such as re-routing schemes etc., are stored at the network's center and are assigned by the CCI subsystem, e.g. to the transfer destination.

The message would be sent to the receiving client via USSD. The data sent in such a message is typically data regarding the call information such as ANI, DNIS (called number by number, but can be by done by name, too, if the system of the invention can match it with its own database), in order to enable the receiving phone to generate the right message.

Preferably, the receiving party may view the message and then select from a list of several options, the preferred way of handling the call (e.g. divert the call to secretary, send to voice mailbox, transfer to someone else such as the boss, etc.)

In accordance with another exemplary embodiment of the invention, the method further includes providing a pre-defined auto reply to a calling party in response to a call received at the mobile station. Such as a pre-defined auto reply USSD message. Therefore, the end user may define his line to send such an auto reply to the calling party, providing the latter by using a USSD message with any details desired such as "I am out of my office," "will return on ," "will have limited access to my voice mailbox," etc.

Certain embodiments enable a user to change between various predefined presence scenarios. The presence scenarios and routing instruction are stored in the cellular network center, and preferably each presence scenario will be associated with suitable operative instructions, for example: in an "in meeting" scenario a caller will receive a USSD message with such details. Once the mobile station user changes the scenario, a message is sent to CCI subsystem, which will handle incoming calls based on the predefined message table.

According to yet another exemplary embodiment, selected subscribers may get an indication via a USSD message as to the whereabouts of other group members, e.g. a secretary may get an indication as to whether the boss is presenting call or idle, support manager can view all support employees presence, while support employees will be prevented from viewing each other or their boss' presence.

In addition or in the alternative, the enterprise management administrator or end user may configure and define personalized interaction messages based on the called state. In addition, a definition may include receiving USSD interaction messages only while in call (i.e. do not want to receive interaction USSD messages while call ringing).

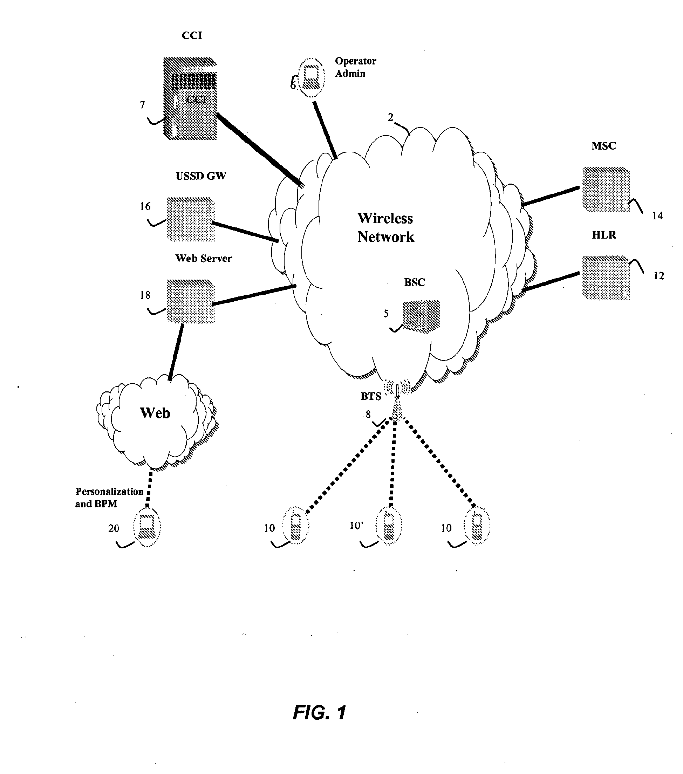

Turning to Fig. 1, which illustrates a wireless network **2** operative in accordance with certain embodiments of the present invention. The network comprises basic elements such as other wireless networks; base station controller ("BSC") **5**, mobile switching center ("MSC") **14**, HLR **12**, BTS **8** and the operator's management system **6**, as well as a plurality of mobile stations, **10**. The mobile stations include, but are not limited to, cellular phones such as cellular phones **10** and **10'**, personal digital assistants, smart phones, and wireless network devices. In addition, the network described herein further comprises a Call Control Interaction subsystem ("CCI") **7** constructed in accordance one or more of the embodiments of the present invention.

For the sake of this example, its assumed that all cellular phones designated in this Fig. 1 with numeral **10**, belong to users that are associated with company A which is a subscriber of the CCI service.

USSD GW **16**, can either be an internal part of the CCI subsystem **7**, or, be a part of the mobile operator's network. The CCI subsystem communicates with USSD GW 7, requesting it to send specific USSD messages to subscribers **10**. The USSD GW 7 receives interaction requests and reply messages from subscribers **10** and forwards the messages to the CCI subsystem.

A WEB management administration can be accessed by users **10** via PC **20**, mobile device or any other capable device via a web server **18** to personalize the call control interaction message. Users such as subscribers **10**, company administrators, mobile operator employees, can personalize subscribers USSD messages and other parameters, such as receive other subscriber call status between 09:00 to 17:00. The users can personalize the USSD message to include options such as to transfer to a specific named subscriber with a canned message, and defme personal canned messages.

The network described herein can also comprise a Centrex®-like (hereinafter referred to for convenience as Centrex) device ("WX") constructed in accordance one or more of the embodiments of the present invention. In this case the CCI 7 can be part of a WX system as described in PCT patent application WO2006056983 entitled "Method and Device for Routing Communications in Cellular Communications Network" assigned to common assignee and which is hereby incorporated by reference for all the useful information it contains.

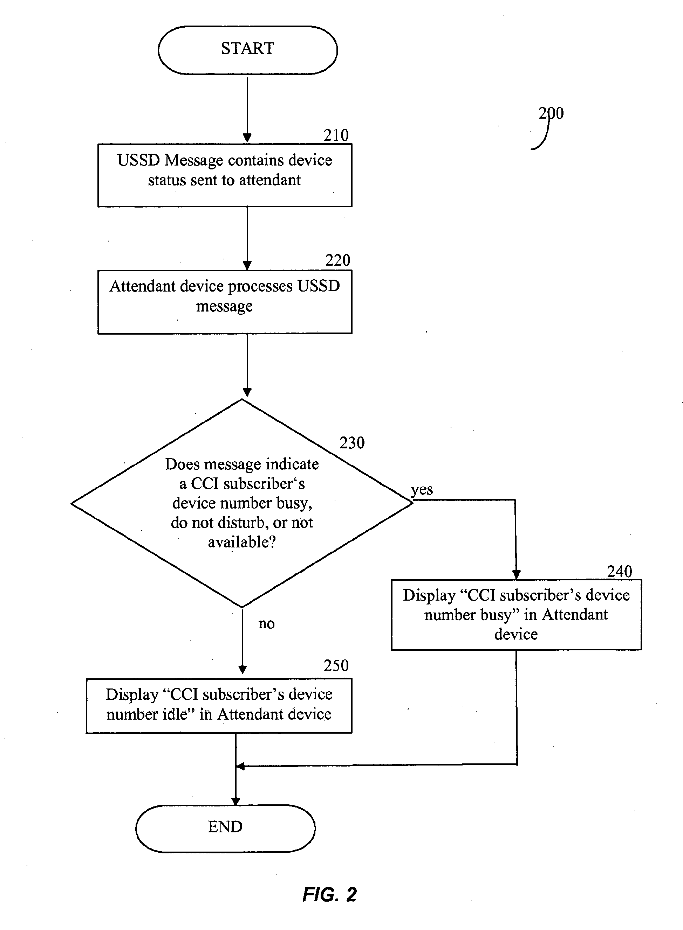

**Figure 2** Illustrates a device status indication using the USSD protocol. In this exemplary message flow, an attendant embodied in a device **10**, receives a status of another device **10** within a group visible to or associated with the attendant. A device whose status is checked, may be, but is not limited to, the attendant's supervisor cellular phone **10**. The USSD message informs, for example, to the attendant device **10** the type of availability of the supervisor device **10**, for example to receive calls, messages, and the likes on the respective device. The attendant device may display a physical indication, e.g., a light indication, a virtual indication, or a text indicating the supervisor's device status. The attendant can request at any time the status of the supervisor device **10**. A person skilled-in-the-art would readily realize that other forms of communication can be transferred in the same manner. Communication such as providing a busy signal to an attendant's device **10,** when supervisor's device **10** is in use. It should be further noted that the notation of a supervisor's device **10** is provided for reference purposes only and any one of the devices **10** may be correlated to the attendant's device **10** to provide the benefits of the disclosed invention.

In addition to status information, data information and control information can also be communicated between devices. Data information can be USSD messages sent from a device to a group of devices with information such as meeting information, routing location maps and so on. Control information can be USSD messages to a device instructing the device on how to present data sent to the device such as text layout, volume from the sending device and so on.

Specifically, Fig. 2 shows an information message sent by the CCI subsystem **7** to the attendant device **10** (step **210**). The USSD message is generated, either automatically or manually, each time the availability of the supervisor device **10** changes. A status change in supervisor device **10** may occur when a call is disconnected, a call originates, out of range, "do not disturb" mode, and the likes. A status change may also occur automatically based on time of day, day of the week, day of the year, predefined holidays, and others. The USSD message can include additional options consisting of, but not limited to, options such as call control interaction, calling number and so on. The information message is received at the attendant device **10** (step **220**) and the status from the message is displayed on or by the attendant's device **10**. If the USSD message indicates that the supervisor device **10** is busy (step **230**) then calls, messages, or other communications, are not transferred to the respective device (step **240**) from the attendant device **10**; otherwise, calls, messages, or other communications, are transferred to the supervisor device **10** (step **250**) from the attendant device **10**. Partial blocks of calls, messages, or other communication can be requested. A partial block will block all requests to the supervisor except for a few requests allowed to be transferred by the attendant. Those allowed are on a list displayed on the attendant screen. A virtual or physical indication, or a text at the attendant device **10,** can be displayed indicating the supervisor's device **10** status.

During the exemplary message flow, the supervisor's device status may change while the attendant is responding to a call. In this example a new USSD message is re-sent to the attendant while the attendant is incall, notifying the attendant of the modified state, this USSD message can include additional options consisting of, but not limited to, options such as call control interaction options of the attendant's current state, calling number and so on.

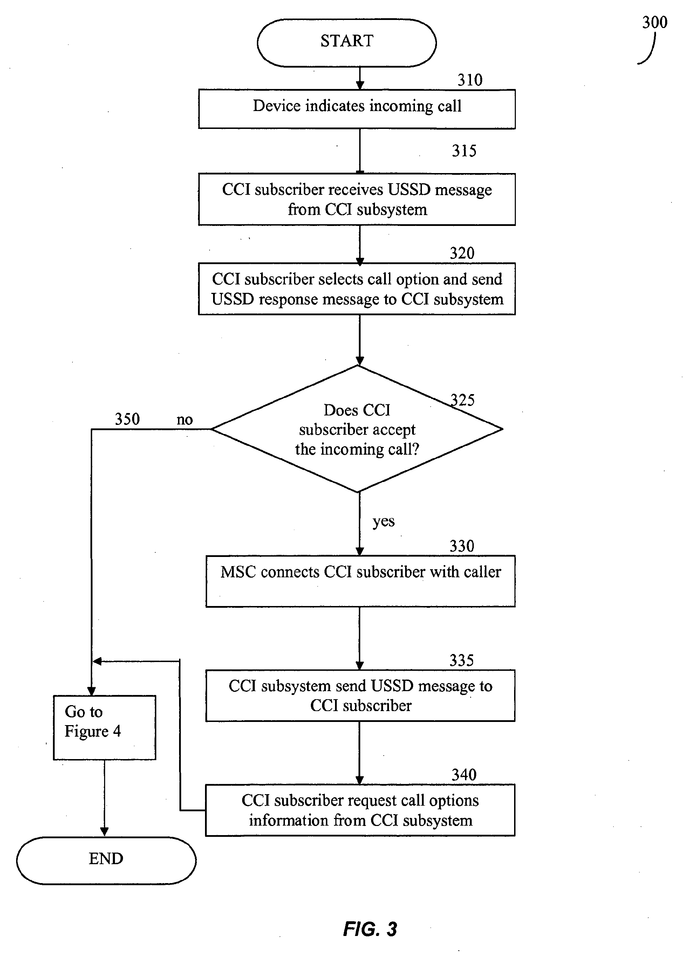

**Figure 3** illustrates the processing of an incoming call with information provided on the CCI subscriber device **10** about the originating caller, called number, and information about the CCI subscriber's call handling options and selections.

Caller originates a call to a CCI subscriber **10**. The mobile operator's MSC **14** receives the call, and because the destination is a CCI subscriber **10,** the MSC **14** passes call details to CCI subsystem **7**. The CCI subsystem **7** receives the information regarding the new call and looks up the data related to the called number and identifies the CCI subscriber **10**.

The CCI subsystem **7** then alert the CCI subscriber **10** with an incoming call message (step **310**). CCI subsystem **7** sends a USSD message (step **315**) to CCI subscriber **10** with the call control options of the ringing state. The options can be the same to all CCI subscribers **10** or can be customized per CCI subscriber **10,** the options may be further different if CCI subscriber **10** is idle and a new call is ringing or in a similar case were the subscriber **10** is in call and receives a new call (call waiting). The CCI subscriber **10** has the option of changing the exact USSD message received at each state of the call such as the listed options of the message. The CCI subscriber **10** can define, for example via a web interface, if and how to receive call control messages while the ring-tone is received. In one embodiment of the disclosed invention the CCI subscriber **10** will have to manually accept the USSD session and then receive the USSD message, however, embodiments that automatically accept the USSD sessions are specifically included in the scope of the disclosed invention.

Call control manager sends the USSD messages to the CCI subscriber **10** and interacts with the CCI subsystem **7**. CCI subsystem **7** interacts with the call control manager providing the call control manager with the information of which CCI subscriber **10** to set up the USSD session with, and what USSD message to send to the CCI subscriber **10**. Call control manager also receives information from CCI subscriber **10** such as: CCI subscriber **10** from session ID "x" sent an answer. The USSD forwards the message to the CCI subsystem **7.** The CCI subsystem **7** maintains call control parameters such as timers and messages associated with USSD interface protocol and CCI subscriber **10**. It should be noted that the CCI subscriber **10** can request information from CCI subsystem **7** during any state of the call by initiating USSD messages in accordance with the disclosed invention.

Once the request to the CCI subsystem **7** is sent, the CCI subscriber **10** can wait for the CCI subsystem **7** to provide the caller information and response options before proceeding with the call (step **315**).

Once the USSD message is received by the CCI subscriber **10** (step **315**), the CCI subscriber **10** (step **320**) sends a USSD message back to the CCI subsystem **7** indicating to the CCI subsystem **7** that the CCI subscriber **10** either accepts or rejects the call with routing response data. Rejecting or accepting a call by the subscriber **10**, can in some cases requires the CCI subscriber **10** to select the "send" button or "end" button on the device **10**. In many cases these options are managed directly by the MSC without a USSD message sent by the CCI subscriber **10** to the CCI subsystem **7**. The CCI subscriber **10** can also send messages to the CCI subsystem **7** by sending a predefined string of digits to the CCI subsystem **7**. The string of digits may be created by, but is not limited to, a depression of a physical button or a button displayed on a touch screen. In other embodiments of the disclosed invention voice activation or motion detection activation may be used and are integral parts of the disclosed invention.

If the CCI subscriber **10** accepts the call (step **325**), the CCI subsystem **7** sends a message to the MSC **14** to connect the incoming call with the CCI subscriber **10**. The MSC **14** connects the call (step **330**). The CCI subsystem **7** also sends a USSD message (step **335)** to the CCI subscriber **10** providing updated call control options for the state of the connected call. During the call the CCI subscriber **10** may lose the current response options display on his device. When a device **10** indicates that it wants the current state interaction information, CCI subsystem **7** receives request (step **340**) from CCI subscriber **10** and sends a USSD message providing caller information with the current response options, which will be displayed on the device **10**.

The CCI subscriber **10** sends a USSD message to further provide options on how to handle the call. In an example these may be, but not limited to, a request to transfer the call to attendant, or transfer the call with a canned message to instruct the party how to handle the call. Such instructions may include, but are not limited to, setting a meeting with the caller, providing help to the caller, taking a message from the caller, overriding a disallowed incoming call from a particular caller, or establishing a conference call with another CCI subscriber **10**, with or without canned messages, and so on.

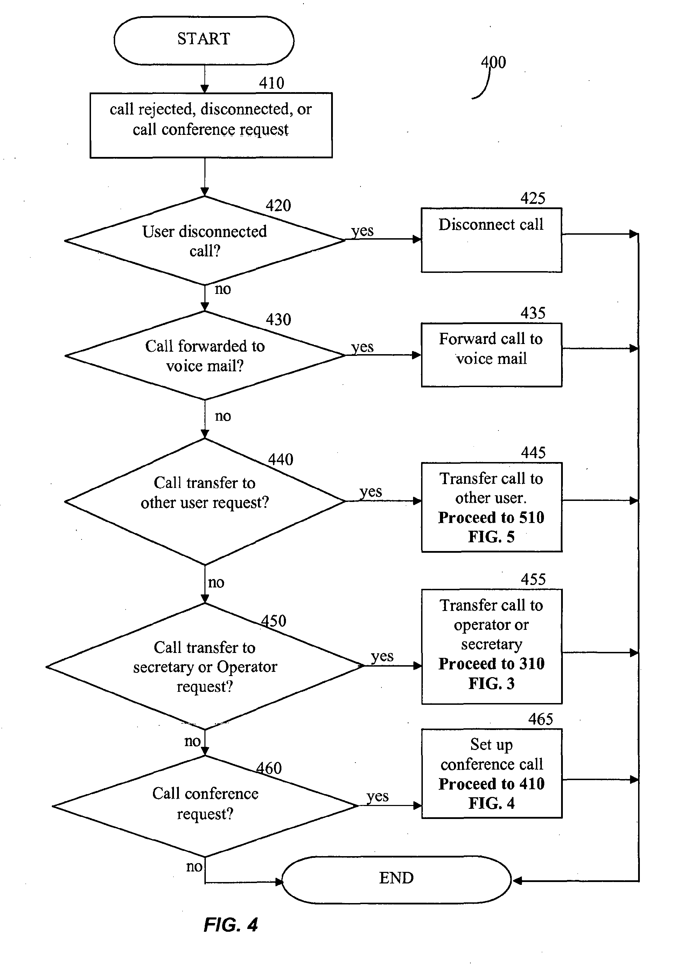

Once the CCI subscriber **10** is in the process of a call and receives the USSD updated call control options message, the CCI subscriber **10** can select, for example, the routing option displayed on the screen, or just converse with the caller. The CCI subsystem **7** proceeds with the call in accordance with the principles disclosed with respect of Fig. 4. If the CCI subscriber **10** rejects the call (step **350**), the CCI subscriber **10** can either ignores the call or forwards the call (step **350**). As described above the CCI subscriber **10** sends a USSD message to further provide options on how to handle the rejected call. The CCI subsystem **7** proceeds with the call in accordance with the principles disclosed with respect of Fig. 4.

During a call, multiple USSD messages can be sent between the CCI subsystem **7** and CCI subscriber **10** to provide the ability to the CCI subscriber **10** to choose the handling of calls with the option provided. Every CCI subscriber **10** has a call option database. A call option database may be unique for a given CCI subscriber **10,** for a company, for any type of group or a system generic database.

**Figure 4** shows an exemplary flowchart **400** in which the CCI subsystem **7** requests the MSC **14** to perform the action sent by the CCI subscriber **10** by means of a USSD message. The CCI subsystem **7** also sends USSD messages to the new CCI subscriber **10** to provide information on the call. The CCI subscriber **10** can request from the CCI subsystem **7** to hold the call the CCI subscriber **10** just received, and retrieve the call later. If the CCI subscriber **10** is in call, the CCI subscriber **10** can swap calls using USSD messages in accordance with the principles of the disclosed invention.

The CCI subscriber informs the CCI subsystem how to proceed with the call (step **410**). One of the actions selected by the CCI subscriber **10** is "disconnect call". The USSD message sent by the CCI subscriber **10** to the CCI subsystem **7** indicates "disconnect call" (step **420**). Upon receiving the USSD message from the CCI subscriber **10**, the CCI subsystem **7** informs the MSC **14** to disconnect the call (step **425**). The USSD message may also instruct the CCI subsystem **7** to start a new call after the call disconnect.

The USSD message sent by the CCI subscriber **10** can indicate the call to be forwarded to the CCI subscriber's **10** own voicemail box (step **430**). The CCI subsystem **7** then sends a message to the MSC **14** to connect the originating caller to the CCI subscriber's **10** voicemail (step **435**).

The USSD message sent by the CCI subscriber **10** can indicate the call to be transferred to another CCI subscriber **10** within the same company (step **440**). The call is transferred to the new CCI subscriber **10** with an optional USSD message (step **445**). The USSD message may contain information about the caller with a request from the CCI subscriber **10** sender to the new CCI subscriber **10**, such as "set up a meeting," "help the caller," and more. The call is processed as a new call connecting the original caller to the new CCI subscriber **10**. The CCI subsystem **7** proceeds with the call in accordance with the principles disclosed with respect of Fig. 3.

The USSD message sent by the CCI subscriber **10** can request the call to be transferred from the current CCI subscriber **10** to an attendant (step **450**). At the same time CCI subsystem **7** sends a USSD message with the selected canned message which is then sent to the attendant's phone **10** "set a meeting" and the device status of the sending device **10**. As a result of the transfer, CCI subscriber **10** is disconnected from the call and the USSD session ends. The call is transferred to the attendant. Attendant (step **455**) receives the call and receives the USSD message related to the call. The call is processed as a new call connecting the original caller to the attendant. The CCI subsystem **7** proceeds with the call in accordance with the principles disclosed with respect of Fig. 3.

The USSD message sent by the CCI subscriber **10** can request to establish a conference with another party (step **460**). The CCI subsystem **7** instructs the MSC **14** to establish the conference with the new party. The CCI subsystem **7** can also send USSD messages to the new party with information about the caller with optional information from the CCI subscriber **10** in accordance with the principles disclosed with respect of Fig. 3.

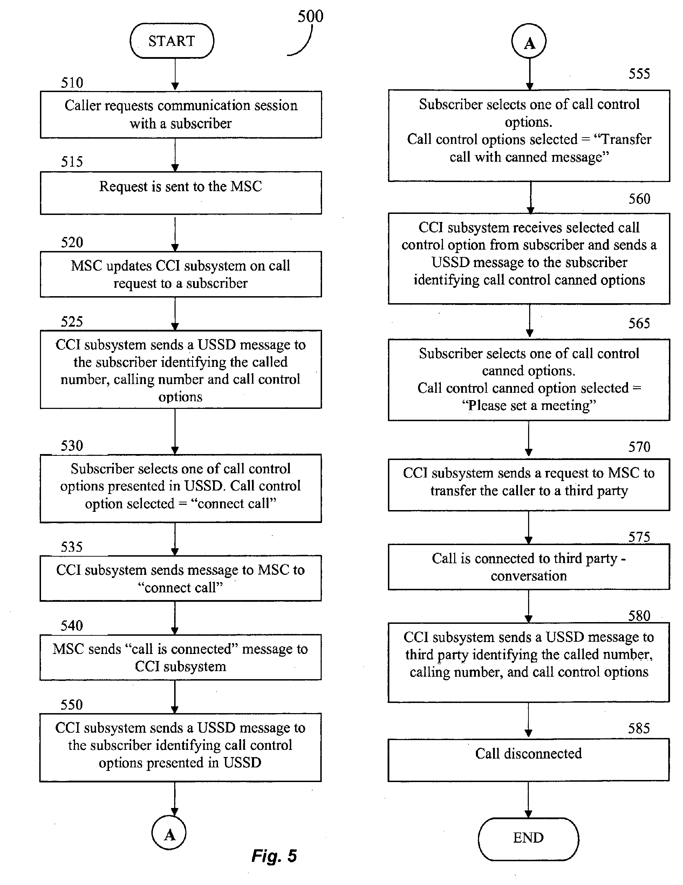

**Figure 5** shows an exemplary call flowchart **500,** illustrating interaction capabilities between a CCI subscriber and CCI subsystem. The interaction controls the call in which CCI subscriber **10** uses USSD canned messages to control and personalize a call being transferred to a CCI subscriber **10**.

As shown in the flowchart a request to establish a communication to a CCI subscriber **10** is requested (step **510**). Once the request (step **515**) arrives at the MSC **14**, the MSC **14** sends a message (step **520**) to the CCI subsystem **7**. The CCI subsystem **7**, receives the request and sends a USSD message (step **525**) to the CCI subscriber **10.** The message consists of the caller number, calling number, dialed number and call control options list. Call control options list contains, but not limited to, options such as "connect call," "transfer call," "rejects call" and so on. Options sent to the CCI subscriber **10** are determined by a database assigned to each CCI subscriber **10** and selected by the CCI subsystem **7** based on progress status of the call. The options in the database can be different for each CCI subscriber **10.** The CCI subscriber **10** selects an option from the list and sends a USSD message (step **530**) to the CCI systems **7**. In an exemplary call, the CCI subscriber **10** selected option is to establish the call with the caller. Once the CCI subsystem **7** receives the message, the CCI subsystem **7** sends a message (step **535**) to the MSC **14** to connect the call between the caller and the CCI subscriber **10.** The MSC **14** establishes the call and sends a message (step **540**) to the CCI subsystem **7** indicating the call is connected. The CCI subsystem **7** also sends another USSD message (step **550**) to the CCI subscriber **10** with a new call control options list. The option list can be one of, but not limited to: transfer call, conference call, transfer call to <name>, consultation, hold, consult with <name>, transfer to <name> voice mail, transfer with canned message to <name>, send canned message, send interaction canned message.

In an exemplary call, the CCI subscriber **10** selects the option (step **555**) to transfer the call to a subscriber named Jane with a canned message. Once the CCI subsystem **7** receives the request message from the CCI subscriber **10**, the CCI subsystem **7** sends a new USSD message (step **560**) back to the CCI subscriber **10** with canned information option list. Canned messages provide the CCI subscriber **10** with further controlling the handling of the call. Through the canned messages the CCI subscriber **10** directs information to the party how to proceed with a request. Information such as, but not limited to, "set a meeting," "help the caller," "get a message" and so on. Multiple USSD canned messages can be communicated between the CCI subsystem **7** and the CCI subscriber **10** during a call. In an exemplary call, the CCI subscriber **10** selects the option "set a meeting" and sends the USSD response message (step **565**) to the CCI subsystem **7**. The CCI subsystem **7** sends a message (step **570**) to the MSC **14** to transfer the call between the caller and a CCI subscriber **10**. The transfer can be implemented via Intelligent Network (IN) protocol or via sending a USSD message to MSC **14** with the short codes for call transfer while spoofing the CCI subscriber **10** ID. For example, CCI subsystem **7** sends a string defined for transfer 4*, 4=third party number Jane, the MSC translates it as coming from the CCI subscriber **10.** In an exemplary call, CCI subscriber **10** Jane is connected (step **575**) to the caller. The CCI subsystem **7** also sends USSD message (step **580**) to the CCI subscriber **10,** Jane, with call control options list. The list details, but is not limited to, the caller, the transfer party, and the request from the transfer party to set up a meeting with the caller. The CCI subsystem **7** can also send USSD message options list message to a non wireless device phone. For example, if Jane has a VoIP SIP phone, the CCI subsystem **7** converts message (step **580**) to SIP and sends the USSD message data part of the display attributes of the SIP, so the SIP phone can display the message. The message includes the following details, but is not limited to, the caller, the transfer party, and the request from the transfer party to set up a meeting with the caller. CCI subscriber **10** Jane converses with the caller, sets up a meeting and disconnect the call (step **585**).

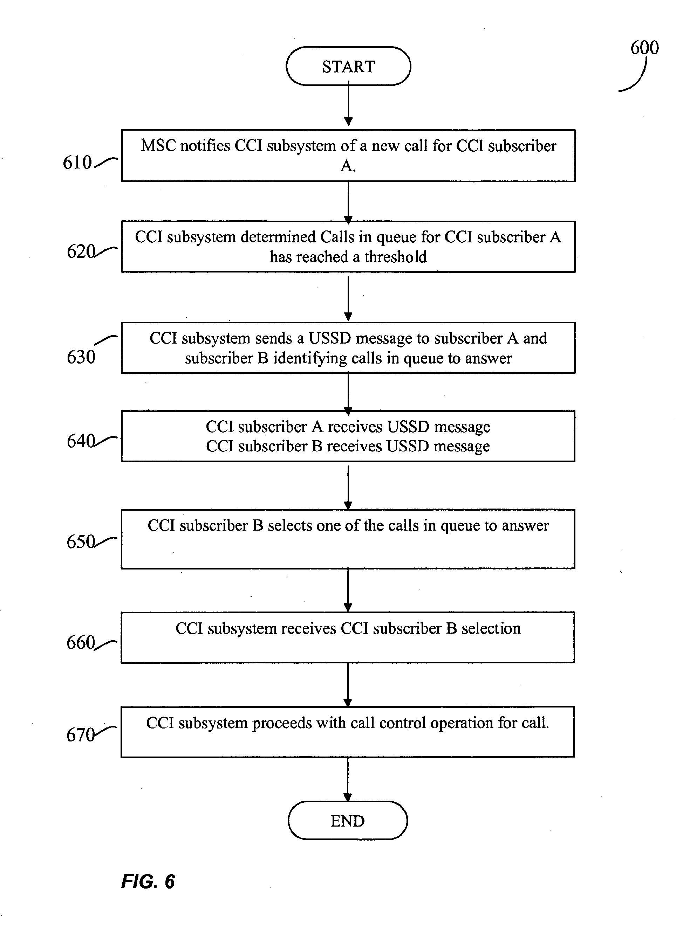

**Figure 6** shows an exemplary flowchart **600** in which CCI subscriber **10** receives a USSD message with details of all calls waiting in a queue. The calls may be listed on the CCI subscriber **10** queue or on a queue belonging to another CCI subscriber **10**. Each time there is a change in the CCI subscriber **10** queue, a new USSD message is sent to the CCI subscriber **10**. CCI subscriber **10** can select any of the listed calls in queue and control interaction such as answer call, reject call, send canned message.

As shown in flowchart **600** MSC **14**, receives a new call request (step **610**) for CCI subscriber **10**, subscriber **10** is in call and may have several calls in queue. MSC **14** sends a message (step **610**) to the CCI subsystem **7**. The CCI subsystem **7** receives the request (step **620**) and determines that the number of calls in a queue has reached a threshold. The CCI subsystem **7** sends a USSD message (step **630)** to CCI subscriber **10'** and CCI subscriber **10** indicating a new list and reaching the list threshold. The message (step **640**) is received by both CCI subscribers **10** and **10'.** The message consists of the calls in queue, caller number, calling number and call control options list. In an exemplary call, Subscriber **10'** selects one of the calls in queue (step **650**) and responds with the selection to CCI subsystem **7.** The CCI subsystem **7** sends a message (step **660**) to the MSC **14** to connect the selected call with the CCI subscriber **10'.** The CCI subsystem **7** proceeds with the call **670** in accordance with the principles disclosed with respect of Fig. 3

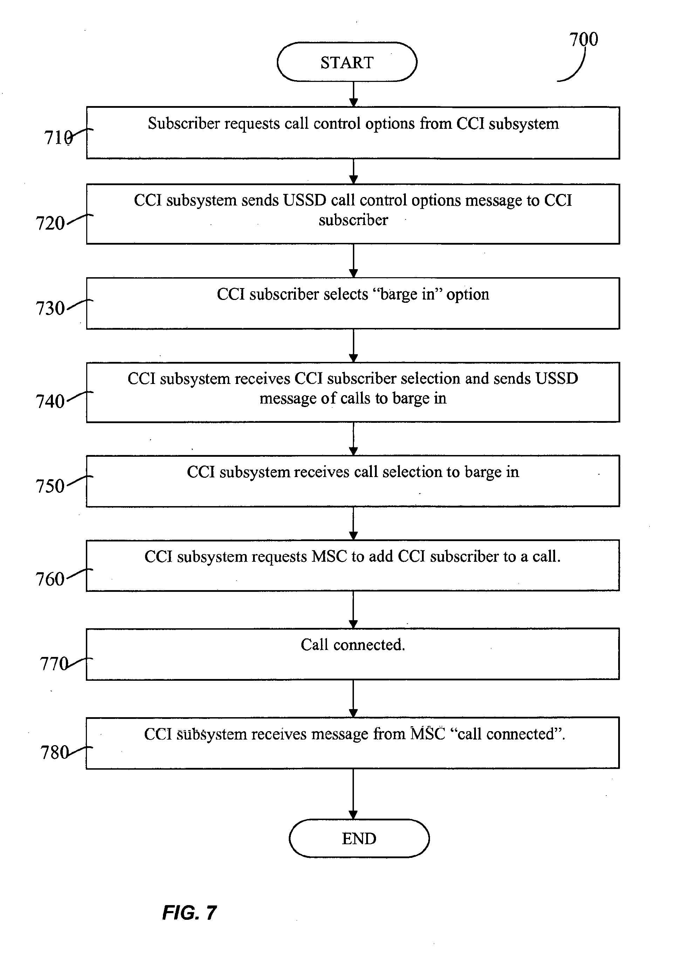

**Figure 7** shows an exemplary and flowchart **700** in which CCI subscriber **10** receives a USSD message call control options such as "barge in" or "silent monitor". CCI subscriber **10** selects an option and sends the selection back to the CCI subsystem **7**. The CCI subsystem **7** sends the CCI subscriber a USSD message with a list detailing all calls, which subscriber **10** is allowed to operate with the selected option.

As shown in flowchart **700**, subscriber **10** requests to receive call control options (step **710**) from the CCI subsystem **7**. The request can be sent via a request to establish a new USSD session or via an established session. The request can be a predefined string sent to CCI subsystem **7,** requesting current call control options list. The CCI subsystem **7** receives the request and sends a USSD message (step **720**) to the CCI subscriber **10.** The message consists of call control interaction options which consists of, but not limited to, options such as "barge-in," "silent monitor" and so on. The CCI subscriber **10** selects an option from the list and sends a USSD message (step **730**) to the CCI subsystem **7.** In an exemplary call, the CCI subscriber **10** selects option "barge-in." Once the CCI subsystem **7** receives the message, the CCI subsystem **7** sends a message (step **740**) with a list of potential calls which CCI subscriber **10** can barge into. Options sent to the CCI subscriber **10** are determined by a database assigned to each CCI subscriber **10** and selected by the CCI subsystem **7** based on progress status of the call. The options in the database can be different for each CCI subscriber **10**. The CCI subscriber **10** selects a call from the list and sends a USSD message (step **750**) to the CCI subsystem **7**. The CCI subsystem **7** sends a message (step **760**) to the MSC **14** to barge-in subscriber **10** to the selected call. The MSC **14** connects CCI subscriber **10** to the selected call (step **770**) and sends a message (step **780**) to the CCI subsystem **7** indicating the call is connected.

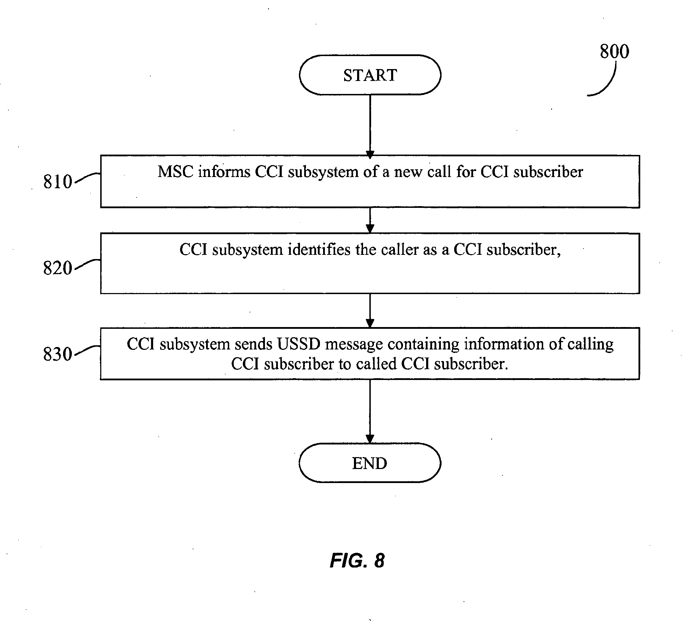

**Figure 8** shows an exemplary flowchart **800** in which CCI subscriber **10** receives a USSD message with details of the caller data stored in the CCI database such as title of caller.

As shown in flowchart **800**, MSC **14** receives a new call for CCI subscriber **10**. MSC **14** sends a message (step **810**) to the CCI subsystem **7**. The CCI subsystem **7** receives the request and identifies the caller (step **820**). The caller is stated in the CCI database as a caller which permits sending to other CCI subscribers **10** additional information data. The permission to send additional information data and the type of data to be sent can be authorized by, but not limited to, the CCI subscriber **10,** or the company's CCI subscriber **10** administrator. Additional information data options sent include, but not limited to, are such as "Joe Cohen - VP Sales East Coast", "Jane Lipkin - 052-123-4567", "customer support" and so on.

In this case caller requested to send "Joe Cohen - VP Sales East Coast". CCI subsystem **7** sends USSD message (step **830**) to subscriber **10** with the additional data, as part of this message additional options can be sent consisting but not limited to options such as call control interaction, called number and so on.

In an Example of the present invention, some or all of the method components are implemented as a computer executable code. Such a computer executable code contains a plurality of computer instructions that when performed in a predefined order result with the execution of the tasks disclosed herein. Such computer executable code may be available as source code or in object code, and may be further comprised as part of, for example, a portable memory device or downloaded from the Internet, or embodied on a program storage unit or computer readable medium.

The principles of the present invention, including, for example the CCI 7 and the USSD GW 16 may be implemented as a combination of hardware and software and because some of the constituent system components and methods depicted in the accompanying drawings may be implemented in software, the actual connections between the system components or the process function blocks may differ depending upon the manner in which the present invention is programmed.

The computer executable code may be uploaded to, and executed by, a machine comprising any suitable architecture. Preferably, the machine is implemented on a computer platform having hardware such as one or more central processing units ("CPU"), a random access memory ("RAM"), and input/output interfaces. The computer platform may also include an operating system and microinstruction code. The various processes and functions described herein may be either part of the microinstruction code or part of the application program, or any combination thereof, which may be executed by a CPU, whether or not such computer or processor is explicitly shown. In addition, various other peripheral units may be connected to the computer platform such as an additional data storage unit and a printing unit.

The functions of the various elements shown in the figures may be provided through the use of dedicated hardware as well as hardware capable of executing appropriate software. When provided by a processor, the functions may be provided by a single dedicated processor, by a single shared processor, or by a plurality of individual processors, some of which may be shared. Explicit use of the term "processor" or "controller" should not be construed to refer exclusively to hardware capable of executing software, and may implicitly include, without limitation, digital signal processor hardware, ROM, RAM, and nonvolatile storage. Other hardware, conventional and/or custom, may also be included.

All examples and conditional language recited herein are intended for pedagogical purposes to aid the reader in understanding the principles of the invention and the concepts contributed by the inventor to furthering the art, and are to be construed as being without limitation to such specifically recited examples and conditions. Moreover, all statements herein reciting principles, aspects, and embodiments of the invention, as well as specific examples thereof, are intended to encompass both structural and functional equivalents thereof Additionally, it is intended that such equivalents include both currently known equivalents as well as equivalents developed in the future, i.e., any elements developed that perform the same function, regardless of structure.

While the present invention has been described at some length and with some particularity with respect to the several described embodiments, it is not intended that it should be limited to any such particulars or embodiments or any particular embodiment, but it is to be construed with references to the appended claims so as to provide the broadest possible interpretation of such claims in view of the prior art and, therefore, to effectively encompass the intended scope of the invention.

It will be appreciated that although various aspects of the invention have been described with respect to specific embodiments, alternatives and modifications will be apparent from the present disclosure, which are within the scope of the present invention as set forth in the following claims. For example, enterprise management can be done by web management or by any other method such as using wireless device, using voice call etc.) as long as the enterprise is provided with the ability to control and define how the routing of its employees' mobile devices will be implemented (i.e. set rules, create company wide features and parameters). It should be further noted that the teachings shown herein are also applicable when a user device initiates a communication with either a call center and/or another user device or devices.

## Claims

1. A method (200) for call control allowing a party receiving an incoming call to obtain information about the caller and act upon the obtained information about the caller, the information is obtained prior to the call and during the call, the obtained information is included in messages sent and received using a Unstructured Supplementary Service Data USSD protocol, the method is **characterized by**:
• sending from a call control manager (7), over a wireless network, a first message using the Unstructured Supplementary Service Data USSD protocol to a first device associated with the party receiving the incoming call;
• receiving by said call control manager (7) a first response message sent using the USSD protocol from said first device (10) responsive of said first message (230, 410); and,
• exchanging messages using the USSD protocol between said call control manager and said first device, said messages containing selection lists comprising a plurality of call options sent to said first device from said call control manager and responses thereof received from said first device, wherein said exchanging messages is initiated responsive to a type of said first response message and performed during an active call established with the first device (420, 430, 440, 450, and 460);
• wherein said type of said first response is any one of: accepting said call, rejecting said call, rejecting said call with a message, diverting said call to voice mail, diverting said call to a second device, and wherein a call option of said plurality of call options is one of: transferring said call to a second device, transferring said call to a voicemail, adding a second device to said call, and a canned message.

2. The method of claim 1, wherein said first message contains call initiator information wherein said call initiator information is one or more of:
said call initiator device number, said call initiator dialed device number, and said call initiator member status, call initiator name, call initiator company title, call initiator organization name, and call initiator preferred status.

3. The method of claim 1, further comprising at least one of:
• determining contents of said selection list responsive to information about said first device (340); and
• retrieving said information about said first device from a database (410).

4. The method of claim 1, wherein said responses received from said first device comprising:
• one or more digits transferred to a call control manager over a communication channel using a USSD interface;
• said digits generated by a sequential or parallel depression of buttons, said buttons being one of physical buttons, displayed buttons.

5. The method of claim 1, further comprising any one of:
• sending a barge-in call control message from said call control manager to said first device during a call in progress;
• receiving a call control message from said first device to set up a conference call;
receiving a message by said call control manager and creating a new call responsive of said message; or
receiving a message by said call control manager and swapping between calls in progress; and
• sending a message to another subscriber requesting a response.

6. A call control manager (7) allowing a party receiving an incoming call to obtain information about the caller and act upon the obtained information about the caller, the information is obtained prior to the call and during the call, the obtained information is included in messages sent and received using a Unstructured Supplementary Service Data USSD protocol, the control manager is **characterized by**:
• means for sending, over a wireless network, a first message using the Unstructured Supplementary Service Data USSD protocol from the call control to a first device associated with the party receiving the incoming call;
• means for receiving a first response message sent using the USSD protocol from said first device responsive of said first message (230, 410); and
• means for exchanging, using a USSD protocol, messages with said first device, said messages containing selection lists comprising a plurality of call options sent to said first device and responses thereof received from said first device, wherein said exchanging messages is initiated responsive to a type of said first response message and performed during an active call established with the first device, said type of said first response is any one of: accepting said call, rejecting said call, rejecting said call with a message, diverting said call to voice mail, diverting said call to a second device, and wherein a call option of the plurality of call options is any one of:
transfer said call to a second device, transfer said call to a voicemail, add a second device to said call, and a canned message.

7. The call control manager of claim 6, further comprising:
means for initiating said exchanging of messages responsive of a type of said first response message.

8. The call control manager of claim 6, further comprising at least one of:
• means for determining said call options of said selection list responsive of information about said first device;
• means for retrieving said information about said first device from a database;
• means for causing a display of status on a display of said first device, said status is of a device communicating over a wireless network by exchanging one or more messages using the USSD protocol;
• means for swapping to another call;
• means for enabling barge-in to a call in progress;
• means for enabling consultation with another subscriber;
• means for enabling set up of a conference call;
• means for updating an attendant device status; and
• an application interface for the integration to at least an enterprise business system.

9. A wireless exchange comprising the call control manager of claim 6,

## Patentansprüche

1. Verfahren (200) zur Verbindungssteuerung, das einer einen Anruf empfangenden Partei erlaubt, Informationen über den Anrufer zu erhalten und auf die erhaltenen Informationen über den Anrufer zu reagieren, wobei die Information vor dem und während des Anrufs erhalten wird, wobei die erhaltenen Informationen in Meldungen enthalten sind, die nach einem USSD-Protokoll (Unstructured Supplementary Service Data) gesandt und empfangen werden, Verfahren, **dadurch gekennzeichnet, dass**
• von einer Verbindungssteuerung (7) über ein Funknetzwerk eine erste Meldung nach dem USSD-Protokoll (Unstructured Supplementary Service Data) zu einem ersten Gerät gesandt wird, das mit der Partei verbunden ist, die den Anruf erhält,
• durch die genannte Verbindungssteuerung (7) eine erste Antwortmeldung empfangen wird, die nach dem USSD-Protokoll (Unstructured Supplementary Service Data) vom genannten ersten Gerät (10) in Antwort auf die genannte erste Meldung (230, 410) gesandt wird, und
• Meldungen nach dem USSD-Protokoll zwischen der genannten Verbindungssteuerung und dem genannten ersten Gerät ausgetauscht werden, wobei die genannten Meldungen Auswahllisten enthalten, die eine Vielzahl von Verbindungsoptionen umfassen, die von der genannten Verbindungssteuerung an das genannte erste Gerät gesandt werden und Antworten darauf, die vom genannten ersten Gerät empfangen werden, wobei der genannte Austausch von Meldungen in Antwort auf eine Art der genannten ersten Antwortmeldung begonnen und während einer aktiven Verbindung ausgeführt wird, die mit dem ersten Gerät hergestellt wird (420, 430, 440, 450 und 460),
• wobei die genannte Art der genannten ersten Antwort eine der folgenden ist: Annahme des genannten Anrufes, Abweisung des genannten Anrufes, Abweisung des genannten Anrufes mit einer Meldung, Umleiten des genannten Anrufes zu einer Sprachbox, Umleiten des genannten Anrufes zu einem zweiten Gerät, und wobei eine Verbindungsoption der genannten Vielzahl von Verbindungsoptionen eine der folgenden ist: Weiterschaltung der genannten Verbindung an ein zweites Gerät, Weiterschaltung der genannten Verbindung an eine Sprachbox, Zuschaltung eines zweiten Gerätes zur genannten Verbindung und eine aufgenommene Meldung.

2. Verfahren nach Patentanspruch 1, in dem die genannte erste Meldung Verbindungsaufbauinformationen enthält, wobei es sich bei den genannten Verbindungsaufbauinformationen um eine oder mehrere der folgenden handelt:
die genannte Verbindungsaufbau-Gerätenummer, die genannte gewählte Verbindungsaufbau-Gerätenummer und der genannte Verbindungsaufbau-Mitgliedstatus, Verbindungsaufbau-Name, Verbindungsaufbau-Firmentitel, Verbindungsaufbau-Organisationsname und Verbindungsaufbau-Statuspräferenz.

3. Verfahren nach Patentanspruch 1, außerdem mindestens eins der folgenden umfassend:
• Bestimmung des Inhalts der genannten Auswahlliste in Antwort auf Informationen über das genannte erste Gerät (340), und
• Aufsuchen der genannten Informationen über das genannte erste Gerät in einer Datenbank (410).

4. Verfahren nach Patentanspruch 1, in dem die genannten Antworten, die vom genannten ersten Gerät empfangen werden, umfassen:
• ein oder mehrere Digitalelemente, die durch einen Fernmeldekanal, der eine USSD-Schnittstelle verwendet, an eine Verbindungssteuerung übertragen werden,
• wobei die genannten Digitalelemente durch paralleles oder aufeinander folgendes Drücken auf Knöpfe erzeugt werden, wobei diese Knöpfe entweder physische Knöpfe sein können oder angezeigte Knöpfe.

5. Verfahren nach Patentanspruch 1, außerdem irgendeins der folgenden umfassend:
• Senden einer Eingriffs-Verbindungssteuerungsmeldung durch die genannte Verbindungssteuerung an das genannte erste Gerät während einer bestehenden Verbindung,
• Empfang einer Verbindungssteuerungsmeldung vom genannten ersten Gerät zum Aufbau einer Konferenzschaltung; Empfang einer Meldung durch die genannte Verbindungssteuerung und Herstellung einer neuen Verbindung in Reaktion auf die genannte Meldung; oder
Empfang einer Meldung durch die genannte Verbindungssteuerung und Wechsel zwischen bestehenden Verbindungen; und
• Senden einer Meldung an einen anderen Teilnehmer, der eine Antwort anfordert.

6. Verbindungssteuerung (7), die einer einen Anruf empfangenden Partei erlaubt, Informationen über den Anrufer zu erhalten und auf die erhaltenen Informationen über den Anrufer zu reagieren, wobei die Informationen vor dem und während des Anrufs erhalten werden, wobei die erhaltenen Informationen in Meldungen enthalten sind, die nach einem USSD-Protokoll (Unstructured Supplementary Service Data) gesandt und empfangen werden, Verbindungssteuerung (7), **gekennzeichnet durch**
• Mittel zum Senden einer ersten Meldung nach dem USSD-Protokoll (Unstructured Supplementary Service Data) von der Verbindungssteuerung über ein Funknetzwerk zu einem ersten Gerät, das mit der Partei verbunden ist, die den Anruf empfängt,
• Mittel zum Empfangen einer ersten Antwortmeldung, die nach dem USSD-Protokoll (Unstructured Supplementary Service Data) vom genannten ersten Gerät in Antwort auf die genannte erste Meldung (230, 410) gesandt wird, und
• Mittel zum Austausch von Meldungen nach dem USSD-Protokoll mit dem genannten ersten Gerät, wobei die genannten Meldungen Auswahllisten enthalten, die eine Vielzahl von Verbindungsoptionen umfassen, die von der genannten Verbindungssteuerung an das genannte erste Gerät gesandt werden und Antworten darauf, die vom genannten ersten Gerät empfangen werden, wobei der genannte Austausch von Meldungen in Reaktion auf eine Art der genannten ersten Antwortmeldung begonnen und während einer aktiven Verbindung ausgeführt wird, die mit dem ersten Gerät hergestellt wird, wobei die genannte Art der genannten ersten Antwort eine der folgenden ist: Annahme des genannten Anrufes, Abweisung des genannten Anrufes, Abweisung des genannten Anrufes mit einer Meldung, Umleiten des genannten Anrufes zu einer Sprachbox, Umleiten des genannten Anrufes zu einem zweiten Gerät, und wobei eine Verbindungsoption der genannten Vielzahl von Verbindungsoptionen eine der folgenden ist: Weiterschaltung der genannten Verbindung an ein zweites Gerät, Weiterschaltung der genannten Verbindung an eine Sprachbox, Zuschaltung eines zweiten Gerätes zur genannten Verbindung und eine aufgenommene Meldung.

7. Verbindungssteuerung nach Patentanspruch 6, außerdem Mittel zur Auslösung des genannten Austauschs von Meldungen in Reaktion auf eine Art der genannten ersten Antwortmeldung umfassend.

8. Verbindungssteuerung nach Patentanspruch 6, außerdem mindestens eins der folgenden umfassend:
• Mittel zur Bestimmung der genannten Verbindungsoptionen der genannten Auswahlliste in Antwort auf Informationen über das genannte erste Gerät,
• Mittel zum Aufsuchen der genannten Informationen über das genannte erste Gerät in einer Datenbank,
• Mittel zur Erstellung einer Statusanzeige auf einem Anzeigemittel des genannten ersten Gerätes, wobei der genannte Status der eines Gerätes ist, das über ein Funknetz durch Austausch einer oder mehrerer Meldungen nach dem USSD-Protokoll kommuniziert,
• Mittel zum Wechseln zu einer anderen Verbindung,
• Mittel zu Ermöglichung von Eingriffen in eine bestehende Verbindung,
• Mittel zur Ermöglichung von Absprachen mit einem anderen Teilnehmer,
• Mittel zur Ermöglichung der Einrichtung einer Konferenzschaltung,
• Mittel zur Aktualisierung eines Vermittlungsgerätestatus, und
• eine Anwendungsschnittstelle für das Einfügen in mindestens ein Firmengeschäftsnetz.

9. Ein Funkaustausch unter Einschluss der Verbindungssteuerung nach Patentanspruch 6.

## Revendications

1. Procédé (200) pour contrôle des appels permettant à un utilisateur recevant un appel entrant d'obtenir des informations sur l'appelant et d'agir suite aux informations obtenues sur l'appelant, les informations sont obtenues avant l'appel et pendant l'appel, les informations obtenues sont comprises dans des messages envoyés et reçus en utilisant un protocole de données de service supplémentaires non structurées USSD, le procédé étant **caractérisé par** :
• l'envoi à partir d'un gestionnaire de contrôle des appels (7), par un réseau sans fil, d'un premier message utilisant le protocole de données de service supplémentaires non structurées USSD à un premier dispositif associé à l'utilisateur recevant l'appel entrant ;
• la réception par ledit gestionnaire de contrôle des appels (7) d'un premier message de réponse envoyé en utilisant le protocole USSD à partir dudit premier dispositif (10) en réponse au premier message mentionné (230, 410) et
• l'échange de messages utilisant le protocole USSD entre ledit gestionnaire de contrôle des appels et ledit premier dispositif, lesdits messages contenant des listes de sélection comprenant une pluralité d'options d'appel envoyées au premier dispositif mentionné par ledit gestionnaire de contrôle des appels et des réponses de celui-ci reçues par ledit premier dispositif, ledit échange de messages étant initié en réponse à un type de premier message de réponse et exécuté pendant un appel actif établi avec le premier dispositif (420, 430, 440, 450 et 460) ;
• ledit type de première réponse mentionnée étant un type quelconque parmi : l'acceptation dudit appel, le rejet dudit appel, le rejet dudit appel avec un message, le renvoi dudit appel à une boîte vocale, le renvoi dudit appel à un second dispositif et une option d'appel de ladite pluralité des option d'appel étant l'une parmi : le transfert dudit appel à un second dispositif, le transfert dudit appel à une boîte vocale, l'ajout d'un second dispositif audit appel et un message automatisé.

2. Procédé selon la revendication 1, ledit premier message contenant des informations sur l'appelant étant une ou plusieurs informations parmi : le numéro de dispositif dudit appelant, le numéro de dispositif appelé par dudit appelant et le statut de membre dudit appelant, le nom de l'appelant, le titre de la société de l'appelant, le nom d'organisation de l'appelant et le statut préféré de l'appelant.

3. Procédé selon la revendication 1 comprenant de plus au moins l'une des étapes :
• la détermination de contenus de ladite liste de sélection en réponse aux informations sur ledit premier dispositif (340) et
• la récupération desdites informations sur ledit premier dispositif à partir d'une base de données (410).

4. Procédé selon la revendication 1, lesdites réponses reçues par ledit premier dispositif comprenant :
• un ou plusieurs chiffres transférés à un gestionnaire de contrôle d'appels par un canal de communication utilisant une interface USSD ;
• lesdits chiffres générés par une dépression séquentielle ou parallèle de boutons, lesdits boutons étant soit des boutons physiques, soit des boutons affichés.

5. Procédé selon la revendication 1 comprenant de plus l'une quelconque des étapes :
• l'envoi d'un message de contrôle d'appel d'intrusion dudit gestionnaire de contrôle d'appel audit premier dispositif pendant un appel en cours ;
• la réception d'un message de contrôle d'appel dudit premier dispositif pour organiser une téléconférence, la réception d'un message par ledit gestionnaire de contrôle d'appels et la création d'un nouvel appel en réponse audit message ou la réception d'un message par ledit gestionnaire de contrôle d'appels et la permutation entre des appels en cours et
• l'envoi d'un message à un autre abonné demandant une réponse.

6. Gestionnaire de contrôle d'appels (7) permettant à un utilisateur recevant un appel entrant d'obtenir des informations sur l'appelant et de réagir selon les information obtenues sur l'appelant, les informations sont obtenues avant l'appel et pendant l'appel, les informations obtenues sont comprises dans des messages envoyés et reçus en utilisant un protocole de données de service supplémentaires non structurées USSD, le gestionnaire de contrôle d'appels étant **caractérisé par** :
• des moyens pour envoyer par un réseau sans fil un premier message utilisant le protocole de données de service supplémentaires non structurées USSD du contrôle d'appels à un premier dispositif associé à l'utilisateur recevant l'appel entrant :
• des moyens pour recevoir un premier message de réponse envoyé en utilisant le protocole de données de service supplémentaires non structurées USSD dudit premier dispositif en réponse au premier message (230, 410) et
• des moyens pour échanger, en utilisant un protocole USSD, des messages avec ledit premier dispositif, lesdits messages contenant des listes de sélection comprenant une pluralité d'options d'appels envoyés au premier dispositif et des réponses de ceux-ci reçues par ledit premier dispositif, ledit échange de messages étant initié en réponse à un type de premier message de réponse et exécuté pendant un appel actif établi avec le premier dispositif, ledit type de première réponse étant un type quelconque parmi : l'acceptation dudit appel, le rejet dudit appel, le rejet dudit appel avec un message, le renvoi dudit appel à une boîte vocale, le renvoi dudit appel à un second dispositif et une option d'appel de ladite pluralité des option d'appel étant l'une parmi : le transfert dudit appel à un second dispositif, le transfert dudit appel à une boîte vocale, l'ajout d'un second dispositif audit appel et un message automatisé.

7. Gestionnaire de contrôle d'appels selon la revendication 6 comprenant de plus : des moyens pour initier ledit échange de messages en réponse à un type de premier message de réponse mentionné.

8. Gestionnaire de contrôle d'appels selon la revendication 6 comprenant de plus au moins l'une des étapes :
• des moyens pour déterminer lesdites options d'appel de ladite liste de sélection en réponse aux informations sur ledit premier dispositif ;
• des moyens pour récupérer lesdites informations sur ledit premier dispositif à partir d'une base de données ;
• des moyens pour provoquer un affichage de statut sur un affichage dudit premier dispositif, ledit statut étant d'un dispositif communiquant par un réseau sans fil en échangeant un ou plusieurs messages en utilisant le protocole USSAD;
• des moyens pour permuter un autre appel ;
• des moyens pour permettre l'intrusion dans à un appel en cours ;
• des moyens pour permettre la consultation d'un autre abonné ;
• des moyens pour permettre d'organiser une téléconférence ;
• des moyens pour actualiser un statut de dispositif de standardiste et
• une interface d'application pour l'intégration dans au moins un système de gestion d'entreprise.

9. Echange sans fil comprenant le gestionnaire de contrôle d'appels selon la revendication 6.
